# EUROPEAN PATENT SPECIFICATION

(11) **EP 3 339 834 B1**
(45) Date of publication and mention of the grant of the patent: **10.11.2021**
(21) Application number: 16206527.0
(22) Date of filing: 22.12.2016
(51) Int. Cl.: G01N 15/14, G01N 15/10

(54) **FLOW CYTOMETER WITH MULTIPLE INTENSITY PEAK DESIGN**
DURCHFLUSSZYTOMETER MIT MEHRFACHINTENSITÄTSSPITZENDESIGN
CYTOMÈTRE EN FLUX À CONCEPTION DE CRÊTE D'INTENSITÉ MULTIPLE

(43) Date of publication of application: 27.06.2018
(73) Proprietor: IMEC vzw, 3001 Leuven (BE)
(72) Inventor: VERCRUYSSE, Dries, 3001 Leuven (BE); PEUMANS, Peter, 3001 Leuven (BE)
(74) Representative: DenK iP bv

(56) References cited:
- WO-A1-2004/040319
- US-A- 4 906 094
- US-A1- 2002 093 641
- US-A1- 2004 057 050
- US-A1- 2005 105 077
- US-A1- 2008 268 469
- US-A1- 2009 071 225
- US-A1- 2013 037 726

## Description

### Field of the invention

The present invention relates to the field of analyte sensing. More specifically it relates to detecting, counting and analyzing analytes in a flow, for example flow cytometry.

### Background of the invention

Flow cytometry is a technique for the detection, counting and even analysis of analytes. The analysis may be optical, by fluorescence cytometry, scattering, etc., which is chosen with regard to the particular needs of the user and the type of analyte. Flow cytometry is suitable for biological analytes such as cells, but it can be extended to other analytes such as virus, antibodies, DNA, enzymes, proteins, etc.

Compact cytometers are desirable, especially in the field of point-of-care and/or portable devices. Microfluidics, which imply the fabrication of microscopic channels (microfluidic channels) on a substrate, can be readily applied to this field. This allows the reduction of the amount of sample needed for a thorough analysis.

However, microfluidic channels bring up additional problems. Analytes in a fluid, in general, do not move at the same speed, due to laminar flow. Identical analytes travelling near the center of a channel in general (not only microfluidic channels) would move faster than analytes near channel walls. In non-microfluidic channels, the amount of analytes moving near the channel walls is very small in comparison with the rest of the analytes, and the influence of laminar flow can be disregarded. Thus, in case of wide fluidic channels, the speed of the analytes can be approximated to the speed of the flow. In these cases, flow and flow velocity should be accurately measured if action needs to be taken on the analytes after analysis, such as identification, labelling, sorting, or a second analysis. Flow sensors may be used for measuring this speed.

However, wide channels are difficult to include in integrated and compact cytometers. Normally, these desirable integrated cytometers comprise microfluidic channels, but the effect of the laminar flow is more pronounced in such microfluidic channels, because the amount of analytes near the walls is comparable to the amount of analytes near the center of the microfluidic channel. For example, in a compact flow cytometer comprising two regions of analysis (also called region of interest, or ROI), a first slow analyte may be detected in a first region, and a second, fast, analyte may be detected in a first and in a second ROI before the first one arrives to the second ROI. The second analyte may thus be mistaken for the first analyte, and vice-versa. Thus, the analytes measured in the second ROI may be incorrectly identified, leading to wrong results.

US2005105077 discloses arrays of focused spots obtained from VCSELs oriented at an angle with respect to the flow axis, in order to improve measurements in a flow. The setup requires many detectors and VCSELs, which consume a lot of energy.

US4906094 discloses a relatively wide channel including small scattering areas, separated a long distance in order to obtain good speed measurement. This setup is prone to misidentification and other errors from laminar flow.

US2013037726 discloses a channel with two light sources illuminating the same portion of the channel. Each source of light usually requires special and complex setups, for example each light source may emit at a different modulation frequency and/or wavelength, in order to improve particle discrimination.

US2008268469 discloses a system for analyzing particulates, including means such as pumps and valves to control the flow in one direction and the opposite direction, for improving analysis of particulates in a plug.

US2009071225 discloses storage media and pulse correlation systems, for calibrating flow cytometers. It discloses avoiding simultaneous particle interrogations by providing a great separation between different interrogation points, each providing different measurement channels, and assigning different series of pulses in the channels with different particles. Calibration particles for time-of-flight analysis are used in this system.

WO2004040319 discloses a beamsplitter arrangement with consecutive branching for a microfluidic system, which can be used to provide a plurality of locations for analysis along a microfluidic channel.

US2002093641 discloses a method and apparatus for measuring the velocity of an object and for improving the precision of the distance scale, by introducing a grating in the path of light incident on a velocity detector, thus improving the profile of the field of view of the detectors.

US2004057050 discloses a fluorescent detector, with a low number of sources and improving useful life of lasers. It discloses activating a second laser according to the signal received from an output in response to scattered light, either immediately or after a delay, to produce time-of-flight measurements.

In summary, approximating the speed of the analytes to speed of the flow introduces a lot of error in microfluidic channels. Performing corrections in the flow speed is possible, but it is prone to errors leading to identification mistakes due to changes in speed flow, vortex currents, etc. Measuring the flow speed in different parts of the microfluidic channel either disturbs the flow (e.g. using a cantilever-based optofluidic sensor) or increases the complexity of the setup and measurement system (in case Doppler techniques, such as laser-Doppler velocimetry, are used). Using several detectors of analytes along a microfluidic channel and measuring their average speed may be helpful in case of diluted solutions, in which there is sufficient distance between one analyte and the following. However, a high dilution brings errors, contamination, and it lowers yield, increasing analysis time, which in case of medical applications is a serious drawback.

### Summary of the invention

It is an object of embodiments of the present invention to provide a sensing system comprising an optical detector for detecting analytes in a flow, with analyte speed detection and identification capabilities, allowing high yield and low or no misidentification. It is a further object to provide integration of such sensing system in a microfluidics system.

In a first aspect, the present invention provides a sensing system according to claim 1 comprising
- at least one fluidic channel for providing at least one analyte into at least one region of interest,
- at least one radiation transport system for providing visible, IR, or UV, excitation radiation for exciting analytes traversing the at least one region of interest, so that the analytes emit or scatter a radiation signal upon receiving such excitation radiation,
- a radiation collection system for collecting radiation signals emitted from the at least one region of interest.

The at least one radiation transport system is adapted for providing excitation radiation comprising a plurality of excitation radiation intensity peaks, the sensing system furthermore comprises means for measurement of the speed of the at least one analyte within the fluidic channel, based on the collected radiation signals emitted from the at least one region of interest, the means for measurement of speed comprising timing means for obtaining the time between maxima in radiation signals emitted by the at least one analyte. The sensing system is hereby characterized in that the at least one radiation transport system is adapted to provide excitation radiation comprising a plurality of excitation radiation intensity peaks forming light sheets extending through the width of the fluidic channel, the distance between the excitation radiation intensity peaks being known and being between half of the average diameter of the analyte and twice the average diameter of the analyte, so that the at least one analyte, when traversing the at least one region of interest, emits a radiation signal comprising a maximum in its intensity upon crossing each of the plurality of excitation radiation intensity peaks.

Emission is very much linked to fluorescence. However, in accordance with embodiments of the present invention, the object does not need to be fluorescent, and if it is not, it can still modify the beam so that the velocity can be detected..

It is an advantage of embodiments of the present invention that the instantaneous speed of the analyte of interest can be directly measured upon detection thereof. It is a further advantage is that analyte speed and spectral information can be simultaneously obtained. In a sensing system according to particular embodiments of the present invention, the fluidic channel may be a microfluidic channel.

It is an advantage of embodiments of the present invention that measurement of the speed can be optimized for a predetermined analyte. It is a further advantage that the speed can be readily calculated in a simple way by measuring the period relevant to crossing peaks in the excitation radiation and the predetermined distance between peaks.

In a sensing system according to the present invention, the distance between the excitation radiation intensity peaks is between half of the average diameter of an analyte and twice the average diameter of the analyte. It is an advantage of the present invention that the probability of detecting simultaneously multiple analyte is small, while at the same time obtaining good resolution and discrimination of emitted signal maxima.

In a sensing system according to embodiments of the present invention, at least one radiation transport system may comprise a waveguide, a plurality of split waveguide branches, and a beam splitter between the waveguide and the split waveguide branches for splitting excitation radiation provided by the waveguide and directing it into the plurality of branches. In such embodiments, the intensity of each peak can be the same, as well as the wavelength, thus simplifying detection and measurement, and making the system easily combinable with spectroscopic, fluorescence and/or scattering measurements.

In a sensing system according to embodiments of the present invention, at least one radiation transport system may comprise a grating, which is a grating which is long as compared to the width of the channel, thus making sure cells cannot pass without being detected when the directed beam substantially covers the width of the channel.

A sensing system according to embodiments of the present invention may comprise a plurality of regions of interest and a plurality of radiation transport systems for providing radiation of different wavelengths to each of the regions of interest. This way, multiple measurements can be performed for different analytes. For example, different fluorescent tags may be used, and in embodiments of the present invention, each tag may be optimally excited by a predetermined wavelength.

In such a sensing system according embodiments of the present invention, each of the plurality of radiation transport systems may be adapted to provide means for measurement of the speed of the at least one analyte within the fluidic channel. Speed can be tracked for each analyte, improving its identification and allowing correction of changes in speed, for example due to lateral displacements within the fluidic channel.

In a sensing system according to embodiments of the present invention, the plurality of regions of interest and the plurality of radiation transport systems may be arranged along a plurality of fluidic channels. This allows parallel measurements, further increasing yield.

In a sensing system according to embodiments of the present invention, the radiation signal collection system may comprise an integrated photoelectric system. In such embodiments, little or no signal emitted by an analyte is lost.

In a sensing system according to embodiments of the present invention, the fluidic channel, the radiation collection system and the at least one radiation transport system may be integrated in a single sensing unit. This way, a compact, highly portable and accurate device can be obtained.

A sensing system according to embodiments of the present invention may further comprise spectroscopic analysis means for analyzing the radiation collected from the at least one region of interest.

A sensing system according to embodiments of the present invention may furthermore comprise a radiation source for emitting excitation radiation adapted for generating fluorescence emissions in analytes traversing the at least one region of interest, the radiation collection system being adapted for collecting fluorescence emissions from the analytes. These embodiments allow construction of a compact fluorescence cytometer with speed correction, allowing low misidentification.

A sensing system according to embodiments of the present invention may furthermore comprise a process module for identifying an analyte taking into account the measured speed.

In a second aspect, the present invention provides a cell sorting apparatus comprising a sensing system according to embodiments of the first aspect, and further comprises sorting means for sorting analytes depending on their identification. This way, an integrated cell sorting device, suitable for a lab-on-chip, can be obtained. Such sorting apparatus may be a complete instrument that contains the cell sorter (chip).

In a third aspect, the present invention provides a cytometry apparatus comprising a sensing system according to any of the embodiments of the first aspect, and furthermore comprises control means for generating, based on the measured speed of the at least one analyte, a control signal at a time when the at least one analyte is estimated to pass a particular location in the sensing system, for triggering an action on the analyte or for triggering pulsed analysis. The particular location in the sensing system may be any useful location, such as for instance when an analyte passes across a light beam from a light source, or in front of an optical detector (or imager), or in general a specific location in the channel/system, e.g. an imager or image sensor and/or a sorter. In embodiments of the present invention, the control signal may be used, but does not need to be used, to just trigger an optical light source or detector and/or and image sensor without sorting. It may be used therefore to trigger also some control signals of the apparatus (activate, deactivate power, generation of signals, detection, etc.).

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 illustrates a sensing system according to embodiments of the present invention and a radiation profile of excitation radiation.
FIG. 2 illustrates two sensing systems according to embodiments of the present invention, comprising a double intensity peak and single peak, and two double intensity peaks, respectively.
FIG. 3 illustrates a readout system according to embodiments of the present invention.
FIG. 4 illustrates a parallel sensing system with an asynchronous digital block.
FIG. 5 illustrates two examples of a waveguide for generation of a double intensity peak excitation radiation.
FIG. 6 schematically illustrates the intensity of a detected signal as a function of time, showing two detection events of two analytes crossing a ROI according to embodiments of the present invention.
FIG. 7 illustrates a cell sorting apparatus according to embodiments of the present invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "region of interest", or simply "ROI", reference is made to a zone through which an analyte (e.g. a cell, particle, stained cell, circulating tumor cell, protein, etc. under study) may cross. Typically, the ROI is the region illuminated by excitation radiation emanating from a radiation source. The ROI may have a volume comparable to or smaller than the analyte. In this case, the system is said to provide point information and the excitation radiation focuses to that small volume. The ROI may also be a planar zone, for example a bi-dimensional area through which analytes cross.

Where in embodiments of the present invention reference is made to a "diameter", for example the diameter of an analyte, reference is made to the traditional sense of a spherical diameter for a spherical analyte, but it also has the more general meaning of the longest distance between two opposite parallel lines tangential to the boundaries of an analyte, e.g. of a non-spherical analyte.

Where in embodiments of the present invention reference is made to "excitation radiation", reference is made to radiation adapted for exciting an analyte, which then may emit a radiation signal carrying information regarding the morphology, composition, etc., of the analyte. When the radiation signal emitted by the analyte is collected by a detector, it is said that a "detection event" has taken place.

In a first aspect, the present invention relates to a sensing system for sensing analytes in a flow. The sensing system comprises a source of radiation for the optical analysis, and is adapted to obtain the speed of the analytes, in combination with detection and timing means. The sensing system can be readily adapted for flow cytometry, allowing combination of counting, optical analysis and velocimetry, and even sorting.

In embodiments of the present invention, at least one radiation source may provide excitation radiation for exciting analytes traversing a region of interest. The excitation radiation may be directed into the region of interest by outcoupling from a laser resonance cavity, a waveguide, an optical fiber, or any other suitable radiation carrying means. For example, in case of waveguides or optical fibers, signal outcoupling can be performed through an outcoupling grating; although the present invention is not limited thereto.

The excitation radiation can be chosen, and/or the analytes can be adapted, such that a particular type of radiation signal is generated and emitted by the analytes (e.g. radiation scattering or a fluorescence signal) upon receiving the excitation radiation. In some embodiments of the present invention, analytes are adapted to emit fluorescent radiation when they enter a ROI irradiated by a particular excitation radiation, for instance laser. In order to obtain this, the analytes may for example be fluorescent, or they may be attached to one or more fluorophores.

In embodiments of the present invention, analytes are provided in a fluid medium which is made to flow through fluidic channels into the ROI. In some embodiments, the fluidic channels are microfluidic channels, but the present invention is not limited thereto and it may be applied to wide channels with a height smaller, even much smaller, than its width.

Some embodiments of the present invention comprise a detection system including one or more detectors. The detectors may also be chosen or adapted for a particular type of radiation, e.g. radiation signals emitted by analyte present in the ROI and having a known, predetermined wavelength range. The system may comprise an imager, a CMOS cell, a CCD, etc., and it may further comprise lenses, filters, monochromators, etc.

In embodiments of the present invention, timing means are included for measuring the speed of the analyte, in combination with the detection system and the excitation radiation.

In embodiments of the present invention, the excitation radiation and the timing means may be adapted to extract information regarding the speed of the analytes traversing the ROI.

In existing optical systems, the excitation radiation comprises one intensity maximum, which is high enough to produce some type of measurable response or signal in an analyte, such as detectable forward-, side- and back-scattering, fluorescence emission, Raman scattering, etc. In embodiments of the present invention, excitation radiation is provided with more than one intensity peak, e.g. two intensity peaks or more, thereby producing multiple responses of the analyte when the analyte crosses the ROI. The distance between the excitation intensity peaks is comparable to a relevant size parameter of an analyte (diameter, width, length, etc.). The information obtained from such excitation radiation comprises spectral information (from the radiation wavelength and intensity of the radiation signal emitted by the analyte) and speed information (from the time elapsed between the emissions and the intensity peak separation). For example, the distance between two maxima peaks in the excitation radiation may be half the diameter, or the same as the diameter, or twice the diameter of a roughly spherical cell.

It would be possible to obtain the speed of an analyte using excitation radiation with a single intensity peak, but the excitation radiation needs to be broadly spread (e.g. its full width at half maximum FWFM needs to be larger, e.g. much larger, than the expected analyte) in order to make possible to time the signal emitted by an analyte and use the obtained signal duration to calculate the analyte speed. However, the signal will be very small, and the contrast of the signal at start and finish of emission much smaller (hindering the estimation of the signal duration). Moreover, the probability that several cells cross the broad excitation beam at the same time increases. Using more than one intensity peak advantageously helps increasing the intensity of the signal emitted by analytes. Additionally, it offers a plurality of reference points (the signal emitted upon crossing each intensity peak) much easier to detect than the entrance and exit of the analyte in the excitation radiation. Further, using multiple intensity peaks makes using broad excitation radiation unnecessary, thus reducing the chance of multiple analytes being detected at the same time.

In embodiments of the present invention, the analyte may be bigger than the individual intensity peaks of the excitation radiation. For example, the full width at half maximum (FWHM) of each peak may be smaller than the average diameter, or longest axis of a cross section, of the analyte. Impurities much bigger or much smaller than the expected analyte may be distinguished from the analytes upon entering in the ROI and may be disregarded or identified as such, for example as impurity.

In some embodiments of the present invention, the excitation radiation is selected such that it substantially does not have the same wavelength ranges as the ranges susceptible to be detected by the detectors. In case of certain types of fluorescence detectors, the wavelength range of the excitation radiation preferably does not overlap the wavelength ranges of the fluorescence emission of the analytes. Filters may be positioned between the ROI and the detectors for reducing or removing noise from strain radiation elastically scattered (and carrying similar wavelength as the excitation radiation) by analytes in the flow.

In other embodiments, the detectors are allowed and adapted to receive radiation with similar or the same wavelength as the excitation radiation, e.g. back-, side- or forward-scattered radiation.

In some embodiments, the analytes may be cells with fluorescent markers (e.g. biomarkers such as fluorescent proteins, fluorophores, etc.) attached to them. In particular embodiments of the present invention, one type of analyte may be tagged with a mixture of markers, or alternatively, different types of analytes may be tagged by a different type of marker each. Also combinations may occur.

The analytes in embodiments of the present invention are not limited to cells, but may also include bacteria and particles, such as for instance luminex.

In some embodiments of the present invention, the excitation radiation typically is visible radiation, e.g. visible laser radiation, although the present invention is not limited thereto, and other types of radiation sources may be used, such as for instance UV laser.

In some embodiments of the present invention, the sensing system may provide a plurality of excitation radiations in distanced ROIs to an analyte. More than one of the ROIs, for example each of the ROIs, may be adapted for obtaining the speed of the analytes. Other components that typically may be present in a flow cytometer, such as for instance analyte providers, flow chambers, flow speed detectors and other sensors (e.g. temperature), sample inlets, optical systems, etc. are known by the person skilled in the art.

Embodiments of the present invention may comprise or may be included in sorting systems. For example, once the speed is measured and identified for each analyte crossing the ROI, it is possible to predict the moment at which a given analyte will cross another area, for instance a sorting area, and an actuation (variation of flow pressure, electro-actuation, cytometric systems, etc.) may be used to send an analyte through a given sorting (microfluidic) channel, for example.

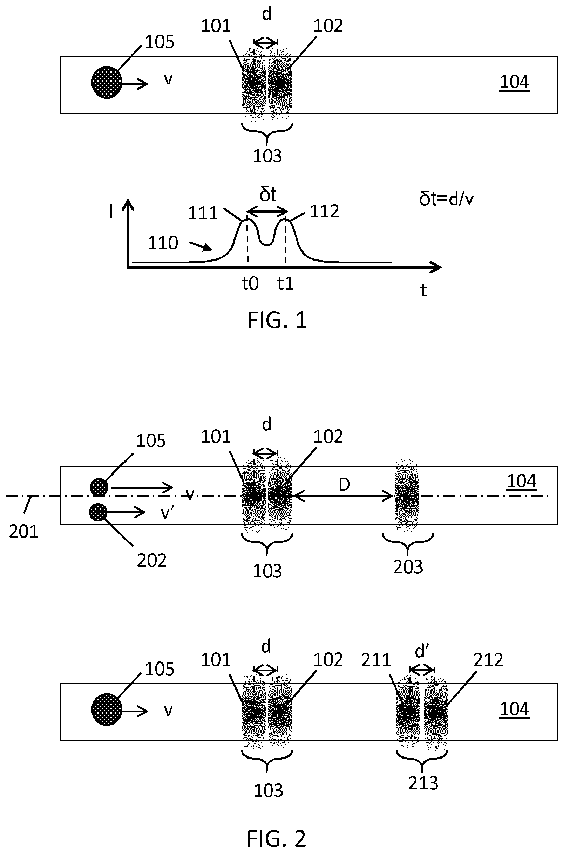

The drawing at the top of FIG. 1 shows an arrangement comprising excitation radiation 103 according to some aspects of the present invention. The excitation radiation 103 comprises two intensity peaks 101, 102. The two intensity peaks have substantially the same intensity and wavelength, and are separated by a distance "d", for example calculated from the center of the FWHM, or distance between maxima, etc. A microfluidic channel 104 crosses both intensity peaks, and an analyte 105 flows therein at a speed "v" in a flow. The distance "d" between the two intensity peaks 101, 102 may be designed to, on one hand, reduce the chances to have more than one analyte being measured at the same time, and on the other hand, allowing enough resolution to be able to discriminate multiple signal maxima. For example the distance "d" may be of the same order as the size of the expected analyte 105, allowing optimization of speed measurement. For example, a range of values which may be used for the distance d in a typical cell cytometry using antibodies with fluorophores as markers may be between half the diameter of an analyte and twice the diameter of an analyte.

The distance "d" may depend on the set-up, on the expected analyte. If, for instance, the analyte is a blood cell of 10 µm average, the distance may be 5 - 20 µm. If the analyte is a bacteria of 2 µm average, then the distance may be between about 1 and about 4 µm.

The graph 110 at the bottom of FIG. 1 shows the intensity "I" of the radiation (e.g. fluorescence) signal emitted by the analyte as a function of time "t". The signal maximum 111 at "t0" indicates the moment at which the analyte 105 crosses the first intensity peak 101 of the excitation radiation 103, and the signal maximum 112 at "t1" indicates the moment at which the analyte 105 crosses the second intensity peak 102. These moments can be defined as the moments at which the radiation signal emitted by the analyte is maximum. Because the distance "d" between the intensity peaks 101, 102 is known, the measurement of the time difference (t1 - t0 = δt) between the first peak 111 and second peak 112 results in an accurate measurement of the speed "v" of the analyte 105 at the ROI illuminated by the excitation radiation 103. Instantaneous velocity can be estimated very accurately, and this can be performed simultaneously with optical analysis suitable for, e.g. cytometry, fluorescence analysis, cell counting, etc.

In some embodiments, the excitation radiation may comprise more than two intensity peaks, e.g. three or more peaks, allowing improvement of the speed measurement and of estimation of the cell size. They may have all the same intensity, although this is not an essential requirement. The peaks may have different intensity. Each peak of the excitation radiation may preferably have the same wavelength, although different wavelengths may be used if it is known that emissions will be easily detected for each of the wavelengths of the plurality of peaks forming the excitation radiation.

The radiation signal emitted by the analyte crossing the excitation radiation can be collected by a sensing system. The sensing system may comprise a timer for measuring the time between intensity peaks such as peaks 111, 112, thus obtaining the speed of the analyte 105 along the excitation radiation 103. Thanks to the measurement of the speed v of the analyte 105, each analyte 105 in a flow can be unambiguously identified. This information may be used for sorting; for example: an analyte may be detected at a certain speed with a certain emission (e.g. fluorescence) and, downstream, electrophoretic or pressure means may move the analyte to a given sorting (microfluidic) channel. If two analytes cross the excitation radiation at different speeds, the sorting system can sort each analyte out due to the identification and prediction of the moment at which each analyte will reach the sorting region. Such prediction may be performed by a processor unit according to some embodiments of the system of the present invention.

The speed v of the analyte 105 with respect to the flow may give a general indication of its type. For example, in prior art detectors, just the presence could be detected by obtaining the emission from a ROI. If no holography, forward- or side-scattering measurements are provided, the only information retrieved from the measurement is whether an analyte passed or not, and the intensity and wavelength of the emission. This is not a good indicator of factors such as e.g. the size or roughness of the analyte. The present invention provides instantaneous velocity in a flow, giving more information regarding, e.g., the size, momentum, roughness, etc., of the analyte, by for example comparing the instantaneous speed of the analyte with independently measured flow speed. This information can be combined with the information from the emitted radiation signals.

A sample may comprise a plurality of, for instance two, distinct analytes with different characteristics, e.g. different sizes or roughness, both susceptible to attach to a same fluorophore. As the attached fluorophores are the same, the signal of one or the other may be practically indistinguishable. Both analytes would give the same fluorescent signal when illuminated with excitation radiation. Embodiments of the present invention, however, allow, upon detection of each analyte, to distinguish and sort it according to its instantaneous speed, with no need of expensive and complicated set-up or high-resolution imaging systems. Furthermore, the velocity of, for instance, bacteria can be used to characterize the colonies they make. Bacteria usually form colonies and behave or move differently because of that.

Also other measurements can be performed with the set-up. For example, additionally, the timer may measure the time elapsed between the moment when the ROI starts and stops emitting radiation. This measurement, combined with the measurement of the flow speed, may give an approximation to the size of the analyte.

A sensing system according to embodiments of the present invention may comprise a plurality of ROIs, each being illuminated with excitation radiation, and at least one thereof being illuminated with excitation radiation comprising multiple intensity peaks. Examples of such systems are shown in FIG. 2. For instance, in a fluorescence detector, the wavelength and/or intensity of each excitation radiation can be optimized for a plurality of markers. Those cases in which a marker emits fluorescence at a particular wavelength range, depending on the incident excitation, can be accurately studied using a plurality of ROIs illuminated individually by a source of excitation radiation. Each particular analyte travelling through a plurality of ROIs can be traced and identified depending on the radiation received by each of the detectors in the detection system, which may be advantageously optimized for each analyte. In case of a large number of analytes, the present invention allows a proper identification of each analyte by measuring the speed of each analyte.

The upper drawing of FIG. 2 shows a channel 104, e.g. a microfluidic channel, (with a central axis 201) through which a plurality of analytes 105, 202 flow. These analytes 105, 202 may travel at different speeds v and v', respectively. The differences in speed may stem from differences of their relative size, roughness and even distance from the central axis 201 of the microfluidic channel 104. In the particular case of FIG. 2, a first analyte 105 travels close to the axis 201 at a speed v, and a second analyte 202 travels further away from the axis 201 and close to the wall of the microfluidic channel 104 at a different speed v', due to for example different laminar flow. The system includes two excitation radiations 103, 203 illuminating two ROIs. The first excitation radiation 103 (with respect to the flow direction) comprises two intensity peaks 101, 102 as in FIG. 1, and a further excitation radiation 203 comprises a single intensity peak. For example, the first excitation radiation 103 may be used to simply measure the speed, thereby identifying analytes, while the second excitation radiation 203 may be used for fluorescence analysis. The excitation radiation 203 may be always illuminating the corresponding ROI while in use, or it may be only turned on at the moment when an analyte is predicted to cross the second ROI, based on the speed measurement of the analytes when crossing the first ROI. In other embodiments, both excitation radiation s 103, 203 may be used for analysis, e.g. both may be used for fluorescence analysis. The further excitation radiation 203 may be characterized by a wavelength different from the wavelength of the first excitation radiation 103, creating an extra measurement stage optimized for a given analyte or fluorescent marker. Alternatively, excitation radiation 103, 203 in both ROIs may present the same wavelengths. More ROIs can be easily implemented, providing multiple measurement stages. Multiple analysis using different wavelengths can be performed. In embodiments of the present invention, by measuring the speed of an analyte in the first ROI while crossing the first excitation radiation 103, the moment at which the same analyte will cross the further excitation radiation 203 can be predicted, because the distance D between the first and second excitation radiations 103, 203 (between the first and second ROIs) can be known and the speed of the analyte over this distance may be considered constant. This reduces or avoids the risk of misidentification of analytes. Further, the prediction of the moment when the analyte will cross the further ROI illuminated by the further excitation radiation 203 can be done in real time, for instance by means of calculation means such as a processor, microprocessor, etc., which may receive the information of the speed and identify the analyte.

The lower drawing of FIG. 2 shows an alternative configuration in which a plurality of excitation radiations, e.g. all the excitation radiations - in the embodiment illustrated two probe beams 103, 213 - present multiple intensity peaks. A first double intensity peak 101, 102 forms the excitation radiation 103, and a second double intensity peak 211, 212 forms the further ROI comprising the further excitation radiation 213. As before, each excitation radiation may be characterized by the same or different wavelengths, making the optimized analysis of multiple types of analytes possible. In embodiments of the present invention, the speed of the analyte at the first ROI illuminated by the first excitation radiation 103 and at the second ROI illuminated by the second excitation radiation 213 can be measured. This eliminates the need to predict the time at which a given cell may cross a further ROI. The distance d, d' between the intensity peaks 101, 102, resp. 211, 212 of the first and second ROIs illuminated by the excitation radiations 103, 213 may be the same, for an accurate measurement of the speed and variations thereof in similar conditions. In alternative embodiments, however, the distances d, d' between the intensity peaks 101, 102, resp. 211, 212 may be different, and may be optimized for different types and sizes of analytes, for instance the distances between peaks may be the same or half the size of as the expected cells.

The speed of each analyte may be recorded together with the spectral information obtained in each ROI and data analysis may be performed off-line, relaxing the requirements of calculations in real time. This allows to operate only in recording mode, and yield may be increased, allowing performing time-consuming calculations and identification at a later stage. Additionally, if two analytes at different speeds cross one ROI simultaneously, the double signal can be easily detected and corrected with the information from further ROIs illuminated by multiple-intensity peak excitation radiations. Moreover, speed variations of an analyte can be easily detected and taken into account for correct identification. These variations may stem from, for example, irregular flux, vortices or lateral displacement of analytes towards the microfluidic channel walls, affecting laminar flow.

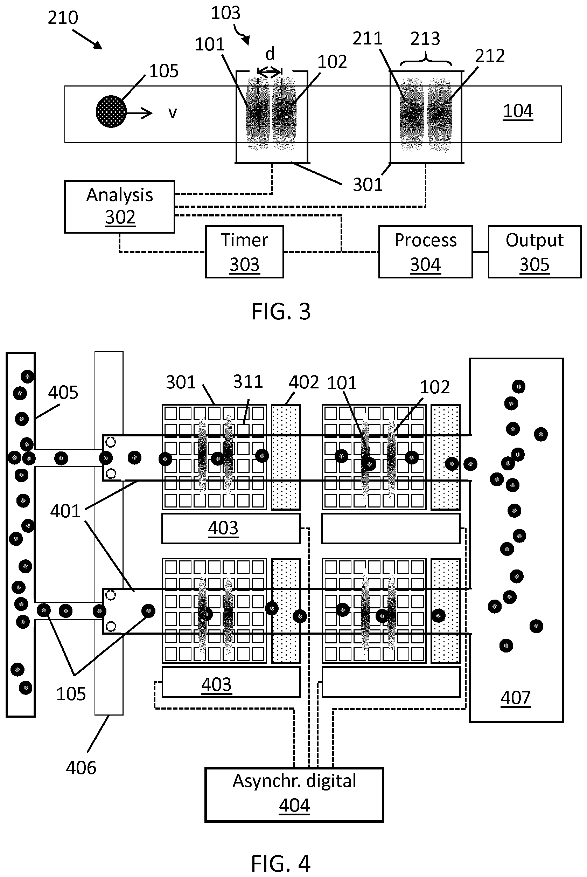

FIG. 3 shows a sensing system 210 suitable for collecting spectral and speed information of an analyte 105 moving through a microfluidic channel 104 at a speed v, according to some embodiments of the present invention. The radiation signal emitted by analytes in the ROI can be collected in a collector 301, which may be a detection system or an optical system which sends the radiation to detectors. While an optical system gives more design flexibility (the detector may be outside the system, for example, and different detectors may be used), if the collector 301 is a detection system, most or all radiation from the ROI can be advantageously collected with low or no losses, without absorption, leak or reflection typical of optical systems. Moreover, an optical signal can be readily converted to an electrical signal, which is more versatile and accepts amplification. For example, fluorescence detectors may lay underneath or on top of the microfluidic channel 104 for collecting (e.g. fluorescence) radiation signals emitted by analytes or by their attached fluorescent tags. An optical system (e.g. comprising lenses, and/or coupling gratings, and/or waveguides for collecting and sending radiation to detectors, etc.) may be also included. The signal collected by the collector 301 can be analyzed in a signal analysis module 302. For example, the analysis module 302 may convert the optical signal, collected by a detection system (as collector 301), into electronic signals, which may be further processed and identified using a timer 303. The analysis module 302 and/or collector 301 may comprise photoelectric elements, CMOS units, analog-to-digital converters, an FPGA, a real-time DSP, etc. This timer 303 may be an electronic timer, a programmable logic controller or similar, and it is included in the sensing system of the present invention in order to record the time it takes for an analyte to pass through the multiple intensity peaks of the excitation radiation 103, 213 in the first and/or second ROIs. For example, the timer 303 can obtain the time elapsed between the first and second emissions collected by the detectors. The speed v can be readily obtained from the predetermined distance d, d' between the intensity peaks 101, 102, resp. 211, 212 of the excitation radiation 103, 213. This information can be processed and/or recorded together with the spectrometer information in a process module 304, for identifying the analyte 105, either in real time or at a later point in time by data processing. An output 305 may be included, for outputting the identification data, e.g. for displaying it.

Further excitation radiation sources may be included, each for example comprising different wavelength ranges for multiple spectroscopic analysis. If the information is processed in real time, it can be predicted at which moment in time a given analyte will cross a second or further ROI illuminated by excitation radiation. Optionally, the excitation radiation illuminating the second or further ROI may be active only in a period in which the analyte is predicted to pass, reducing power use, power dissipation and heating of the microfluidic channel. A further set of detectors, analyzers, etc. may obtain and analyze the spectrum of the analyte crossing the second or further illuminated ROI. The ability to predict the moment an analyte will cross the second or further ROI, and optionally the ability to measure also the speed of the analyte there, improves the identification and measurement of the analyte. Risk of misidentification is overall reduced by adding more ROIs illuminated by excitation radiation.

Using such design, a large amount of cells can be analyzed fast in the different stages, increasing the flexibility and tuning capabilities of fluorescence analysis, because a great number and combinations of fluorescent markers can be used in a single flow, increasing analyte discrimination.

Some exemplary dimensions and parameters of parts of the sensing system 210 are given, but the present invention is not limited to these parameters. For example, the cross section of the microfluidic channel 104 may be have a rectangular or square shape of 50 microns of side and 30 microns height. The detection units 301 may be for example imagers, with a width of 250 microns, and may be for example square and comprise a plurality of pixels, for example a matrix of 7x7 pixels, or 10x10, 100x100 etc., for example forming a pixel array. They may also be photodiodes, systems for collecting radiation and sending it to an analysis module such as a spectrometer, etc. The spatial resolution (e.g. the minimum distance at which fluorescence needs to be resolved) may be 1 micron. If the distance d between intensity peaks 101, 102 is for example 10 microns, for analytes of diameter of around 10 microns moving at a speed of 10 cm/s, a rate of 100 kframes/sec would be needed to resolve analytes at the chosen spatial resolution. In practice, the detectors may have an exposure time of 3.33 microseconds, and a frame rate of 300 kframes per second can be reached. Signal discrimination may be implemented in process or analysis modules for acquiring and/or processing data solely over a predetermined threshold, for example based on the noise level of the detector. A plurality of detector units, for each ROI, may be used. The system may comprise other elements such as optical lenses, color filters, amplifiers, etc. A high number of microfluidic channels utilize better the system area, which is economically advantageous in case of devices integrated in a chip.

In embodiments of the present invention, a plurality of microfluidic channels 401 may be used for parallel analysis. The sensing system may comprise a plurality of microfluidic channels 401 in parallel configuration, as shown in FIG. 4. This increases the speed of measurement, because a higher number of analytes 105 can be analyzed in parallel. This, in turn, improves the accuracy because the processing is relaxed and the concentration of analytes in each microfluidic channel can be reduced. A collector 301 may comprise a plurality of detectors, each of which may comprise a plurality of pixels 311. Each detection system may comprise a row address unit 402 and a readout module 403 for column readout, ADC, logic circuitry, and for example analysis. The data thus obtained can be sent to an asynchronous digital block 404, for example a field-programmable gate array (FPGA) or a digital signal processor (DSP). An integrated or external processing unit may be provided for any or all of analysis, timer and processing functions, for further analysis, timing and speed calculation, data storage, output, etc.

Additionally, other elements may be comprised in the microfluidic system, such as a analyte feed line 405, a hydrodynamic focus feed line 406 in a lower or upper layer of the system, and a collection bus 407.

Embodiments of the present invention may include other features, such as one or more radiation sources (emitting coherent light, IR, UV, laser radiation, etc.), one or more waveguide to transport the radiation from the radiation sources in order to irradiate the ROIs, incouplers for introducing the radiation from the radiation sources into the waveguide, outcouplers for introducing the radiation from the waveguides into the ROIs, etc. The outcouplers may be adapted to produce multiple intensity peaks, which may be obtained by a number of techniques. For example, well known and highly adaptable classical optical structures (prismatic or half-mirror beam splitters, etc.) and/or diffraction gratings providing multi-intensity peak, can be used.

In other embodiments, a dedicated outcoupler can be used.

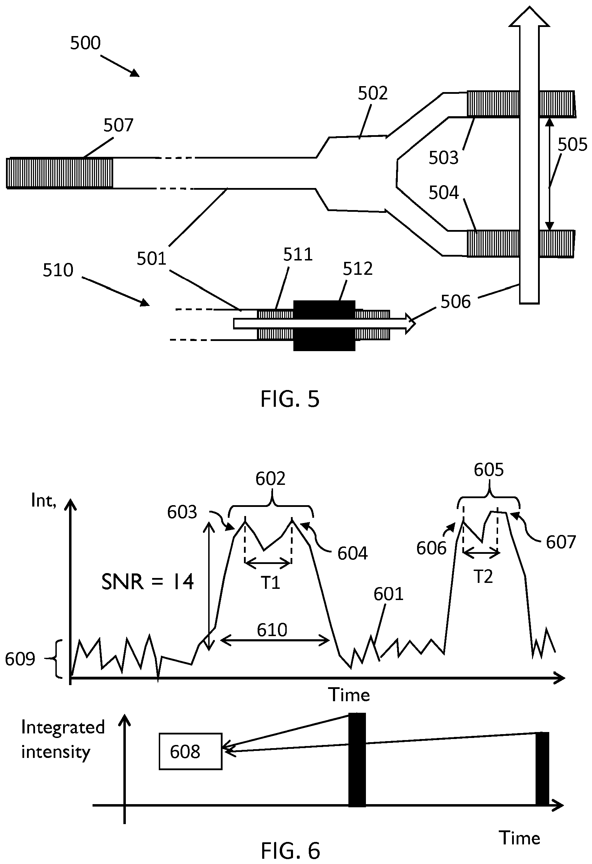

FIG. 5 shows the exemplary embodiments 500, 510 of an outcoupler according to some embodiments of the present invention. The first embodiment 500 comprises a waveguide 501 and beam splitter 502, adapted to divide the excitation radiation in two beams (e.g. of the same intensity) travelling through the split branches of the waveguide. Some embodiments may comprise single- or multi-mode waveguides, silicon-based waveguides(for example, a silicon nitride core in a silicon oxide cladding, on a silicon substrate). Other materials can be used, such as other types of semiconductors, or glass, quartz, etc., on different types of substrates. The waveguide 501 may be integrated within the same substrate containing the microfluidic channel 104. Two outcoupling gratings 503, 504, can output excitation radiation comprising two intensity peaks of a same wavelength, from the excitation beam travelling in the waveguide 501. The distance d between the two intensity peaks of the excitation radiation can be tailored, for example by choosing an appropriate distance 505 between the outcoupling gratings 503, 504. These types of outcouplers are substantially insensitive to misalignment, and the manufacture and installation is easy to implement and integrate, unlike in the case of classical optical structures or specially adapted diffraction gratings providing multi-intensity peak, which require a time-consuming, complex alignment, can be bulky and are not easy to manufacture and integrate. The shape of the intensity profile of the excitation radiation 103 may be adapted for specific purposes. For example, the excitation radiation may comprise a couple of intensity peaks illuminating a small volume through which analytes traverse, for example in the center of a wide channel. Other configurations are possible; for example, FIG. 1 to 3 show particular embodiments in which the excitation radiation 103, 213 comprises two intensity peaks 101, 102, in the form of light sheets resp. 211, 212 extending through the width of the microfluidic channel 104. For example, in FIG. 5, the thick arrow 506 indicates the direction of the flow with respect to the light sheets outcoupled by each grating 503, 504. Other features may be included, for example incoupling gratings 507, for introducing radiation from a source to the waveguide 501. The width of each light sheet can be adapted to the size of the expected analytes, for example, the width may be thinner than the analytes which are expected to be detected, and it may be approximated to a bi-dimensional light sheet. Embodiments of the present invention can be optimized or adapted for specific types of cells, for example by adapting the distance 505 between the outcoupling gratings 503, 504 according to the cell size.

The second exemplary embodiment 510 comprises a long grating 511 with a masking layer 512, for separating the intensity of radiation in two peaks.

Other outcoupling gratings may be used, for example focusing gratings, which may produce two intensity peaks separated by a tailored predetermined distance depending on e.g. the size of a given analyte. Also a diffraction grating could be used, which produces two strong interference peaks..

FIG. 6 shows a schematic example graph of the intensity 601 of a detected signal vs. time. It shows two detection events of two analytes crossing a ROI as in FIG. 1, being illuminated by excitation radiation comprising two intensity peaks. The first event 602 comprises two signal maxima 603, 604 separated by a time period T1. The second event 605 comprises two signal maxima 606, 607 separated by a time period T2. The data analysis may directly extract the periods for different analytes which, combined with the predetermined distance d between intensity peaks, allow to extract the speed of the analytes. In this case, T1>T2, thus the speed of the first analyte is lower than the speed of the second analyte (v1<v2). Additionally or alternatively, a data packet analyzer 608 may analyze the integrated intensity, which may be used to obtain the time periods T1 and T2, taking into account the intensity peak distance d, and hence to obtain the speed. As an example, only signals presenting a high level compared to a predetermined noise level 609 are considered the signal of an analyte. For example, only signals with a signal-to-noise ratio (SNR) of more than 5, for instance more than 10, such as 14 or more shall be used.

Embodiments of the present invention allow for detection of the speed of the analyte, being able to predict the position of an analyte along a microfluidic channel, for example for enabling pulsed analysis, or for triggering an action on the analyte, for example a pushing or pulling force towards a sorting microfluidic channel.

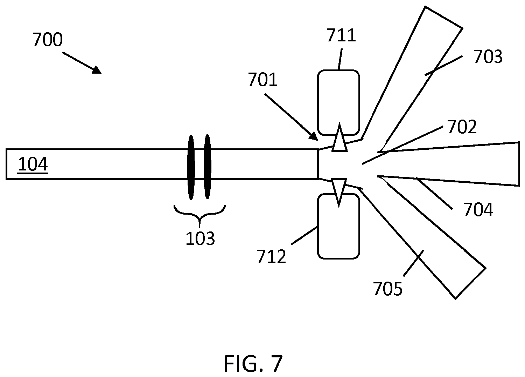

In a second aspect of the present invention, a cell sorter is provided, comprising a sensing system according to embodiments of the previous aspect, further comprising sorting means. A schematic cell sorter 700 is shown in FIG. 7, comprising a ROI illuminated by excitation radiation 103 comprising two intensity peaks, as shown in FIG. 1. Further, a portion 701 of the microfluidic channel 104 comprises sorting means. For example, sorting means may comprise a sorting region 702 comprising a division of the microfluidic channel 104 into two or more microfluidic channels 703, 704, 705. The sorting region may comprise further means 711, 712 for forcing analytes into one or the other channel, for example electrophoresis means, or means for creating a gradient of pressure, e.g. changing locally the pressure in one or other side of the microfluidic channel for instance by generation of bubbles, by a membrane, etc. Thus, when the sensing system detects in a ROI a given analyte, the measurement of its speed allows determining the moment at which it will arrive at the sorting region, and correct sorting can be performed by knowing the distance between the ROI and the sorting region. Thus, a compact and integrated lab-on-chip device comprising cell analysis and sorting is obtained with low or no misidentification.

## Claims

1. A sensing system comprising
- At least one fluidic channel (104, 401) for providing at least one analyte (105,202) into at least one region of interest,
- at least one radiation transport system (501), for providing visible, IR, or UV, excitation radiation (103,203) for exciting analytes traversing the at least one region of interest, so that the analytes emit or scatter a radiation signal upon receiving such excitation radiation,
- a radiation collection system (301) for collecting radiation signals emitted from the at least one region of interest,
wherein the at least one radiation transport system (501) is adapted to provide excitation radiation (103,203) comprising a plurality of excitation radiation intensity peaks (101, 102, 211, 212),
wherein the sensing system furthermore comprises means (302, 303) for measurement of the speed of the at least one analyte (105) within the fluidic channel (104, 401), based on the collected radiation signals emitted from the at least one region of interest, the means for measurement of speed comprising timing means (303) for obtaining the time between maxima in radiation signals emitted by the at least one analyte (105,202), the sensing system **characterized in that** the at least one radiation transport system (501) is adapted to provide excitation radiation (103,203) comprising a plurality of excitation radiation intensity peaks (101, 102, 211, 212) forming light sheets extending through the width of the fluidic channel (104, 401), the distance between the excitation radiation intensity peaks being known and being between half of the average diameter of the analyte and twice the average diameter of the analyte, so that the at least one analyte (105), when traversing the at least one region of interest, emits a radiation signal comprising a maximum (111, 112; 603, 604, 606, 607) in its intensity (601) upon crossing each of the plurality of excitation radiation intensity peaks.

2. The sensing system according to the previous claim, wherein at least one radiation transport system (501 comprises a waveguide, a plurality of split waveguide branches, and a beam splitter (502) between the waveguide and the split waveguide branches for splitting excitation radiation providing by the waveguide and directing it into the plurality of branches.

3. The sensing system according to any of the previous claims , wherein at least one radiation transport system comprises a grating (511) which is long as compared to the width of the channel (104).

4. The sensing system of any of the previous claims, comprising a plurality of regions of interest and a plurality of radiation transport systems for providing radiation of different wavelengths to each of the regions of interest.

5. The sensing system according to claim 4, wherein each of the plurality of radiation transport systems is adapted to provide means for measurement of the speed of the at least one analyte within the fluidic channel (104, 401).

6. The sensing system according to any of claims 4 or 5, wherein the plurality of regions of interest and the plurality of radiation transport systems are arranged along a plurality of fluidic channels (401).

7. The sensing system according to any of the previous claims, wherein the radiation signal collection system (301) comprises an integrated photoelectric system.

8. The sensing system according to any of the previous claims, wherein the fluidic channel (104), the radiation collection system (301) and the at least one radiation transport system (501) are integrated in a single sensing unit.

9. The sensing system according to any of the previous claims, further comprising spectroscopic analysis means for analyzing the radiation collected from the at least one region of interest.

10. The sensing system according to any of the previous claims, furthermore comprising a radiation source for emitting excitation radiation adapted for generating fluorescence emissions in analytes (105,202) traversing the at least one region of interest, the radiation collection system (301) being adapted for collecting fluorescence emissions from the analytes.

11. The sensing system according to any of the previous claims, furthermore comprising a process module (304) for identifying an analyte taking into account the measured speed.

12. A cell sorting apparatus (700) comprising a sensing system according to claim 11, further comprising sorting means (711, 712) for sorting analytes depending on their identification.

13. A cytometry apparatus comprising a sensing system according to any of claims 1 to 11, furthermore comprising control means for generating, based on the measured speed of the at least one analyte, a control signal at a time when the at least one analyte is estimated to pass a particular location in the sensing system, for triggering an action on the analyte or for triggering pulsed analysis.

## Patentansprüche

1. Ein Erfassungssystem, umfassend
- mindestens einen Fluidkanal (104, 401) zum Bereitstellen mindestens eines Analyten (105, 202) in
mindestens einem Bereich von Interesse,
- mindestens ein Strahlungstransportsystem (501), um sichtbare, IR- oder UV-Anregungsstrahlung (103, 203) bereitzustellen, um Analyten anzuregen, die den mindestens einen Bereich von Interesse durchqueren, so dass die Analyten ein Strahlungssignal emittieren oder streuen, wenn sie diese Anregungsstrahlung empfangen,
- ein Strahlungssammelsystem (301) zum Sammeln von Strahlungssignalen, die von dem mindestens einen Bereich von Interesse emittiert werden,
wobei das mindestens eine Strahlungstransportsystem (501) angepasst ist, um Anregungsstrahlung (103, 203) bereitzustellen, die eine Vielzahl von Anregungsstrahlungsintensitätsspitzen (101, 102, 211, 212) umfasst,
wobei das Erfassungssystem weiter Mittel (302, 303) zur Messung der Geschwindigkeit des mindestens einen Analyten (105) innerhalb des Fluidkanals (104, 401) umfasst, basierend auf den gesammelten Strahlungssignalen, die von dem mindestens einen Bereich von Interesse emittiert werden, wobei die Mittel zur Geschwindigkeitsmessung Zeitmessmittel (303) umfassen, um die Zeit zwischen Maxima in Strahlungssignalen zu erhalten, die von dem mindestens einen Analyten (105, 202) emittiert werden,
wobei das Erfassungssystem **dadurch gekennzeichnet ist, dass** das mindestens eine Strahlungstransportsystem (501) angepasst ist, um eine Anregungsstrahlung (103, 203) bereitzustellen, die eine Vielzahl von Anregungsstrahlungsintensitätsspitzen (101, 102, 211, 212) umfasst, die Lichtblätter bilden, die sich über die Breite des Fluidkanals (104, 401) erstrecken, wobei der Abstand zwischen den Anregungsstrahlungsintensitätsspitzen bekannt ist und zwischen der Hälfte des mittleren Durchmessers des Analyten und dem Doppelten des mittleren Durchmessers des Analyten liegt, so dass der mindestens eine Analyt (105) beim Durchqueren des mindestens einen Bereichs von Interesse ein Strahlungssignal emittiert, das ein Maximum (111, 112; 603, 604, 606, 607) in seiner Intensität (601) beim Durchkreuzen jeder der Vielzahl von Anregungsstrahlungsintensitätsspitzen umfasst.

2. Das Erfassungssystem nach dem vorstehenden Anspruch, wobei mindestens ein Strahlungstransportsystem (501) einen Wellenleiter, eine Vielzahl von geteilten Wellenleiterzweigen und einen Strahlteiler (502) zwischen dem Wellenleiter und den geteilten Wellenleiterzweigen umfasst, um die vom Wellenleiter bereitgestellte Anregungsstrahlung aufzuteilen und in die Vielzahl von Zweigen zu lenken.

3. Das Erfassungssystem nach einem der vorstehenden Ansprüche, wobei mindestens ein Strahlungstransportsystem ein Gitter (511) umfasst, das im Vergleich zur Breite des Kanals (104) lang ist.

4. Das Erfassungssystem nach einem der vorstehenden Ansprüche, umfassend eine Vielzahl von Bereichen von Interesse und eine Vielzahl von Strahlungstransportsystemen zum Bereitstellen von Strahlung unterschiedlicher Wellenlängen für jeden der Bereiche von Interesse.

5. Das Erfassungssystem nach Anspruch 4, wobei jedes der Vielzahl von Strahlungstransportsystemen dazu angepasst ist, Mittel zur Messung der Geschwindigkeit des mindestens einen Analyten innerhalb des Fluidkanals (104, 401) bereitzustellen.

6. Das Erfassungssystem nach einem der Ansprüche 4 oder 5, wobei die Vielzahl von Bereichen von Interesse und die Vielzahl von Strahlungstransportsystemen entlang einer Vielzahl von Fluidkanälen (401) eingerichtet sind.

7. Das Erfassungssystem nach einem der vorstehenden Ansprüche, wobei das Strahlungssignalsammelsystem (301) ein integriertes photoelektrisches System umfasst.

8. Das Erfassungssystem nach einem der vorstehenden Ansprüche, wobei der Fluidkanal (104), das Strahlungssammelsystem (301) und das mindestens eine Strahlungstransportsystem (501) in einer einzigen Erfassungseinheit integriert sind.

9. Das Erfassungssystem nach einem der vorstehenden Ansprüche, weiter umfassend spektroskopische Analysemittel zum Analysieren der aus dem mindestens einen Bereich von Interesse gesammelten Strahlung.

10. Das Erfassungssystem nach einem der vorstehenden Ansprüche, weiter umfassend eine Strahlungsquelle zum Emittieren von Anregungsstrahlung, die zum Erzeugen von Fluoreszenzemissionen in Analyten (105, 202) angepasst ist, die den mindestens einen Bereich von Interesse durchqueren, wobei das Strahlungssammelsystem (301) dazu angepasst ist, Fluoreszenzemissionen von den Analyten zu sammeln.

11. Das Erfassungssystem nach einem der vorstehenden Ansprüche, weiter umfassend ein Verarbeitungsmodul (304) zur Identifizierung eines Analyten unter Berücksichtigung der gemessenen Geschwindigkeit.

12. Eine Zellsortiereinrichtung (700), umfassend ein Erfassungssystem nach Anspruch 11,
weiter umfassend Sortiermittel (711, 712) zum Sortieren von Analyten in Abhängigkeit von ihrer Identifizierung.

13. Eine Zytometrie-Einrichtung, umfassend ein Erfassungssystem nach Anspruch 1 bis 11, weiter umfassend Steuermittel zur Erzeugung eines Steuersignals auf Basis der gemessenen Geschwindigkeit des mindestens einen Analyten zu einem Zeitpunkt, zu dem der mindestens eine Analyt schätzungsweise eine bestimmte Stelle im Erfassungssystem passiert, um eine Aktion auf den Analyten auszulösen oder eine gepulste Analyse auszulösen.

## Revendications

1. Un système de détection comprenant
- au moins un canal fluidique (104, 401) pour fournir au moins un analyte (105, 202) dans au moins une région d'intérêt,
- au moins un système de transport de rayonnement (501), pour fournir un rayonnement d'excitation (103, 203) visible, IR, ou UV, pour exciter des analytes traversant la au moins une région d'intérêt, de sorte que les analytes émettent ou diffusent un signal de rayonnement lors de la réception d'un tel rayonnement d'excitation,
- un système de collecte de rayonnement (301) pour collecter des signaux de rayonnement émis depuis la au moins une région d'intérêt,
dans lequel le au moins un système de transport de rayonnement (501) est adapté pour fournir un rayonnement d'excitation (103, 203) comprenant une pluralité de pics d'intensité de rayonnement d'excitation (101, 102, 211, 212),
dans lequel le système de détection comprend en outre des moyens (302, 303) pour mesurer la vitesse du au moins un analyte (105) à l'intérieur du canal fluidique (104, 401), sur la base des signaux de rayonnement collectés émis depuis la au moins une région d'intérêt, les moyens de mesure de vitesse comprenant des moyens de minutage (303) pour obtenir le temps entre les maxima des signaux de rayonnement émis par le au moins un analyte (105, 202),
le système de détection étant **caractérisé en ce que** le au moins un système de transport de rayonnement (501) est adapté pour fournir un rayonnement d'excitation (103, 203) comprenant une pluralité de pics d'intensité de rayonnement d'excitation (101, 102, 211, 212) formant des feuilles de lumière s'étendant à travers la largeur du canal fluidique (104, 401), la distance entre les pics d'intensité de rayonnement d'excitation étant connue et étant entre la moitié du diamètre moyen de l'analyte et le double du diamètre moyen de l'analyte, de sorte que le au moins un analyte (105), lorsqu'il traverse la au moins une région d'intérêt, émet un signal de rayonnement comprenant un maximum (111, 112 ; 603, 604, 606, 607) dans son intensité (601) lors du croisement de chacun de la pluralité de pics d'intensité de rayonnement d'excitation,

2. Le système de détection selon la revendication précédente, dans lequel au moins un système de transport de rayonnement (501 comprend un guide d'ondes, une pluralité de ramifications de guide d'ondes divisées, et un diviseur de faisceau (502) entre le guide d'ondes et les ramifications de guide d'ondes divisées pour diviser un rayonnement d'excitation fourni par le guide d'onde et le diriger dans la pluralité de ramifications.

3. Le Système de détection selon l'une quelconque des revendications précédentes, dans lequel au moins un système de transport de rayonnement comprend un réseau (511) qui est long par rapport à la largeur du canal (104).

4. Le système de détection selon l'une quelconque des revendications précédentes, comprenant une pluralité de régions d'intérêt et une pluralité de systèmes de transport de rayonnement pour fournir un rayonnement de différentes longueurs d'onde à chacune des régions d'intérêt.

5. Le système de détection selon la revendication 4, dans lequel chacun de la pluralité de systèmes de transport de rayonnement est adapté pour fournir des moyens de mesure de la vitesse du au moins un analyte à l'intérieur du canal fluidique (104, 401).

6. Le système de détection selon l'une quelconque des revendications 4 ou 5, dans lequel la pluralité de régions d'intérêt et la pluralité de systèmes de transport de rayonnement sont agencés le long d'une pluralité de canaux fluidiques (401).

7. Le système de détection selon l'une quelconque des revendications précédentes, dans lequel le système de collecte de signal de rayonnement (301) comprend un système photoélectrique intégré.

8. Le système de détection selon l'une quelconque des revendications précédentes, dans lequel le canal fluidique (104), le système de collecte de rayonnement (301) et le au moins un système de transport de rayonnement (501) sont intégrés dans une seule unité de détection.

9. Le système de détection selon l'une quelconque des revendications précédentes, comprenant en outre des moyens d'analyse spectroscopique pour analyser le rayonnement collecté provenant de la au moins une région d'intérêt.

10. Le système de détection selon l'une quelconque des revendications précédentes, comprenant en outre une source de rayonnement pour émettre un rayonnement d'excitation adapté pour générer des émissions de fluorescence dans des analytes (105, 202) traversant la au moins une région d'intérêt, le système de collecte de rayonnement (301) étant adapté pour collecter des émissions de fluorescence provenant des analytes.

11. Le système de détection selon l'une quelconque des revendications précédentes, comprenant en outre un module de traitement (304) pour identifier un analyte en tenant compte de la vitesse mesurée.

12. Un appareil de tri de cellules (700) comprenant un système de détection selon la revendication 11, comprenant en outre des moyens de tri (711, 712) pour trier des analytes en fonction de leur identification.

13. Un appareil de cytométrie comprenant un système de détection selon l'une quelconque des revendications 1 à 11, comprenant en outre des moyens de commande pour générer, sur la base de la vitesse mesurée du au moins un analyte, un signal de commande à un moment où l'on estime que le au moins un analyte passe à un endroit particulier dans le système de détection, pour déclencher une action sur l'analyte ou pour déclencher une analyse pulsée.
